# EUROPEAN PATENT SPECIFICATION

(11) **EP 4 452 670 B1**
(45) Date of publication and mention of the grant of the patent: **11.02.2026**
(21) Application number: 22843375.1
(22) Date of filing: 15.12.2022
(51) Int. Cl.: B60C 11/03, B60C 11/12

(54) **CAR TYRE**
FAHRZEUGREIFEN
PNEU DE VOITURE

(30) Priority: 22.12.2021 IT 202100032132
(43) Date of publication of application: 30.10.2024
(73) Proprietor: Pirelli Tyre S.p.A., 20126 Milano (IT)
(72) Inventor: DUPRE', Giulio Lorenzo, 20126 Milano (IT); SPEZIARI, Diego Ettore, 20126 Milano (IT); BELLUZZO, Damiano Leonardo, 20126 Milano (IT)
(74) Representative: Fabiano, Piero
(86) International application number: PCT/IB2022/062287
(87) International publication number: WO 2023/119080

(56) References cited:
- CN-A- 108 819 621
- DE-T5- 112015 001 947
- US-A1- 2021 031 567

## Description

### Field of the invention

The present invention relates to a tyre for passenger cars, in particular an "all season" tyre for high performance or ultra high performance cars.

### Prior art

The following documents describe some examples of high and ultra high performance car tyres: WO2009/004408, WO2015/008137, WO02/078982, WO2019/111089, CN 108 819 621 A, DE 11 2015 001947 T5 and US 2021/031567 A1.

### Summary of the invention

"All season" tyres, which are increasingly appreciated and demanded by users, are generally required to have avery flexible behaviour, which should allow them to provide performance comparable to that of summer tyres in summer and of winter tyres in winter.

The Applicant noted that in order to have features comparable to those of the so-called winter tyres, "all season" tyres should be provided with treads characterised by a high number of grooves or recesses and by a greater depth thereof, as compared to those of a common summer tyre.

The Applicant further observed that, similarly to winter tyres, all season tyres can be characterised by the presence of a dense siping, which, particularly when the tyre rolls on snow-covered roads, provides the tyre with a greater grip on this type of ground, due to the capture of small amounts of snow inside the sipes and the increased friction produced by snow-on-snow contact.

However, the presence of a dense siping, together with the presence of wide and deep grooves, in circumferential and/or transvere direction reduces the rigidity of the tread band, with the consequent risk of performance decay at high speed on dry ground. Moreover, the presence of grooves generates noise.

On the other hand, high or ultra high performance car tyres are required to provide performance, steering precision, and excellent grip, so that they can effectively transfer high torque to the ground and withstand high lateral stresses, even at the high operating temperatures associated with high-speed use.

Better results in terms of performance and grip could be achieved by significantly reducing the void-to-rubber of these tyres.

This kind of tyres, although excellent in terms of performance on track, could lower the safety parameters in wet and snowy conditions. In certain climatic conditions, the presence of precipitation, by making the road surface wet, would indeed significantly reduce tyre grip and would not ensure road holding, adequate traction, effective braking. Furthermore, the Applicant has observed an increasing attention of users towards the ability of tyres, including UHP tyres, to provide long mileage.

The Applicant has indeed observed that, while until a short time ago the interest of users of this kind of tyres was almost exclusively oriented towards obtaining performance levels, nowadays the attention, keeping performance the same, is increasingly focused on mileage.

Generally, when aiming at achieving long tyre mileage, it is provided to have as much rubber to the ground as possible in the area where the tyre contacts the ground (footprint area), and to control the parameters that can affect the triggering of irregular wear phenomena. This is clearly in contrast with the need for "all season" tyres to have a high number of grooves, recesses and/or sipes.

In view of the above, it is clear that "all season" tyres for high or very high performance cars must meet several conflicting requirements in order to provide long mileage and good performance in each different road and weather condition.

The Applicant has therefore faced the problem of providing "all season" tyres for cars, in particular for high or ultra high performance cars, capable of ensuring long mileage, high performance levels in straight running and in cornering, braking and traction, and low noise, without at the same time reducing draining features, running safety on wet ground and mobility/running safety on snow-covered ground.

The Applicant has focused their efforts to achieve this improvement by producing a tyre provided with a tread band having a central region separated from two shoulder regions, respectively an outer shoulder region and an inner shoulder region. The central region of the tyre has been designed so as to have a substantially uniform and balanced distribution of grooves and sipes so as to obtain a void-to-rubber ratio which is substantially constant or slightly higher at the rib closest to the outer shoulder region. This choice provides overall a good mix of rubber to the ground and grooves, which allows performance to be achieved without excessively compromising the safety features of the tyre on wet and/or snow-covered ground.

The distribution and extension of the transverse grooves together with the distribution of the sipes, in particular on the rib closest to the outer shoulder region, is such as to minimize the number of, or to avoid intersections with the remaining transverse grooves and/or sipes, so as not to locally weaken the tyre stiffness, which is thus maintained substantially constant throughout the central region.

In a first aspect thereof, the invention relates to a car tyre having a tread band comprising a central region, extending across an equatorial plane, and two shoulder regions, which are separated from the central region by a first circumferential groove, axially delimiting a first shoulder region from the central region, and a second circumferential groove, axially delimiting a second shoulder region from the central region;
- said central region having a width greater than or equal to at least 35% of an effective width of said tread band;
- said central region having a plurality of ribs comprising respective pluralities of transverse grooves and sipes; said plurality of ribs comprising at least one first rib comprising a plurality of first transverse grooves;
- said first transverse grooves extending over at least 90% of the width of said first rib;
- each first transverse groove comprising a substantially straight first segment, inclined relative to a direction parallel to said equatorial plane so as to form an angle θ smaller than or equal to 70°, a substantially straight second segment, counter-inclined relative to said first segment, and a curvilinear connecting segment extending between said first segment and said second segment;
- said tread band further comprising a plurality of sipes comprising a plurality of first sipes located in said first rib between said first transverse grooves;
- said first sipes extending over at least 60% of the width of said first rib;
- said first sipes having a substantially straight course forming with said equatorial plane an angle θ' concordant with said angle θ;
- said first sipes having no mutual intersection points.

The Applicant has found that, thanks to these features, the tyre of the invention can achieve high performance levels as well as good mileage, while still being able to maintain safe driving on wet and/or snowy roads. Without wishing to be bound by any particular theory, the Applicant believes that the presence, on the ribs of the central region, of transverse grooves and sipes distributed homogeneously and having no, or in any case only a limited number of mutual intersectionsoptimizes the tread band stiffness distribution, both in circumferential direction and in lateral direction, so as to obtain high performance levels in terms of handling, traction, braking and mileage, without at the same time reducing draining features and safety on wet roads.

For the purposes of the present invention, the following definitions apply:
By "tread pattern" it is meant the representation of all points of the tread band (including recesses) in a plane perpendicular to the equatorial plane of the tyre and tangential to the maximum diameter of the tyre.

The measurements of angles and/or linear quantities (distances, widths, lengths, etc.) and/or surface areas are to be intended as referring to the tread pattern as defined above. Furthermore, considering the angular arrangement of the grooves formed in the tread band relative to the equatorial plane of the tyre, such angular arrangement shall be understood, for each point of the groove, as referring to the acute angle (i.e., an angle comprised between 0° and 90° in absolute value) defined by a rotation starting from the equatorial plane to the direction tangent to the groove passing through that point.

By the term "equatorial plane" of the tyre it is meant a plane perpendicular to the rotation axis of the tyre and dividing the tyre into two substantially equal portions.

By "circumferential" direction it is meant a direction generally directed according to the rotation direction of the tyre, or slightly inclined (e.g., by at most about 15°) relative to the rotation direction of the tyre.

By "axial" direction it is meant a direction substantially parallel to the rotation axis of the tyre, or at most slightly inclined (e.g., by at most about 15°) relative to the rotation axis of the tyre. Generally, the axial direction is substantially perpendicular to the circumferential direction.

By the term "effective width" referred to the tread band it is meant the width of the radially outermost portion of the tread band (from one edge to the other) intended to contact the ground.

By the term "groove" it is meant a recess formed in a portion of the tread band, having a width greater than or equal to 2 mm and preferably a depth greater than 2 mm.

By the term "sipe" it is meant a recess formed in a portion of the tread band, having a width smaller than 2 mm, preferably smaller than or equal to 1.5 mm, at least over a major portion of its depth. In the present descritption a sipe may have, at the radially outer surface of the tread band, a width greater than or equal to 2 mm, because of the presence of bevels at the radially outer edges.

By "width" or "maximum width" of a sipe, unless otherwise specified, it is therefore meant the width (or maximum width) of the sipe measured when the tyre is new, at the aforementioned major portion of its depth (i.e., leaving out possible bevels at the radially outer surface of the tread band).

By "void-to-rubber ratio" it is meant the ratio between the total surface area of the recesses (sipes and/or grooves) of a given tread band portion (possibly of the whole tread band) and the total surface area of the given tread band portion (possibly of the whole tread band). For the purpose of evaluating the ratio, the determination of the overall surface area of the recesses is made considering the width as defined above (i.e., leaving out possible bevels at the radially outer surface of the tread band).

The present invention, in one or more preferred aspects thereof, may comprise one or more of the features hereafter presented.

Coveniently, at least some of the first sipes may extend over the whole width of the first rib.

Advantageously, the first transverse grooves may extend over the whole width of the first rib.

Advantagesously, the first transverse grooves may have a width equal to or smaller than 7 mm.

The first sipes have a substantially straight course forming with said equatorial plane an angle θ' greater than the angle θ.

Preferably, the first sipes are substantially parallel to one another over at least 80% of their extension.

Conveniently, the central region may comprise a third and a fourth circumferential groove axially delimiting at least a second and a third circumferential rib.

Preferably, the second and/or third circumferential ribs may respectively comprise a plurality of pairs of second and/or third transverse grooves.

Preferably, the second and/or third transverse grooves of said pairs may extend over at most 40% of the width of the rib where they are located.

Conveniently, the second and/or third transverse grooves may extend from a circumferential groove adjacent to the rib where they are located.

Advantageously, the second and/or third transverse grooves of each pair may extend starting from two different circumferential grooves which are adjacent to the rib where they are located.

Preferably, the second and/or third transverse grooves may be counter-inclined relative to the first segment of the first transverse grooves.

Conveniently, in said pairs of second and/or third transverse grooves a second and/or a third transverse groove extends on the conitnuation of the remaining second and/or third circumferential groove.

Preferably, the second and/or third transverse grooves may have a substantially straight course.

Advantageously, the course of the second and/or third transverse grooves forms with the equatorial plane an angle α greater than or equal to 45°.

Preferabaly, the second and/or third grooves of a same pair may extend on the continuation of the second segment of the first transverse grooves.

Advantageously, the second and third trasverse grooves may have a width equal to or smaller than 7 mm.

Advantageously, the second and third circumferential ribs may respectively comprise a plurality of second and/or third sipes having a substantially transverse course.

Conveniently, the second and/or third sipes may extend over at least 80% of the width of the rib where they are located.

Preferably, the second and/or third sipes may extend over the whole width of the rib where they are located.

Advantageously, the second and/or third sipes may have a substantially straight course. Conveniently, the second and/or third sipes may be counter-inclined relative to the first segment of the first transverse grooves.

Advantageously, the second and/or third sipes may have a course substantially parallel to the course of the second and/or third transverse grooves.

Preferably, in the rib where they are located, the second and/or third sipes may be alternated with the pairs of second and/or third transverse grooves.

Coveniently, in the rib where they are located, at least some of said second and/or third sipes may be alternated with the pairs of second and/or third transverse grooves in a 2-to-1 ratio.

The Applicant further believes that, still in order to control the stiffness distribution on the tread band without reducing the draining ability of the same, the transverse grooves in the central region should have a significant in the rib where they are located, but preferably a variable width.

To this end, conveniently, the second and/or third transverse grooves of each pair may be connected by a fourth and/or a fifth sipe.

Advantageously, the fourth and/or fifth sipes may have a course parallel to the course of the second and/or third transverse grooves.

Preferably, the first, second, and third circumferential ribs may have a void-to-rubber ratio, resulting from said plurality of transverse grooves alone, equal to or smaller than 0.1.

Conveniently, the first, second, and third circumferential rib each have a void-to-rubber ratio, resulting from the plurality of transverse grooves and sipes, equal to or smaller than 0.16.

Preferably, the contribution of said plurality of sipes alone to the void-to-rubber ratio in each of said first, and/or second, and/or third circumferential ribs is smaller than or equal to 0.06.

Preferably, the first circumferential rib has a void-to rubber ratio equal to or greater than the void-to-rubber ratio of the second and/or third circumferential rib.

Conveniently, the first shoulder region and the second shoulder region respectively comprise a plurality of fourth and fifth transverse grooves having a maximum width greater than or equal to 4 mm and extend over at least 50% of the width of the shoulder region where they are located.

Preferably, the fourth or fifth transverse grooves may respectively extend from the first or the second circumferential groove.

Advantageously, the first shoulder region and the second shoulder region further comprise a plurality of sixth and seventh sipes having a substantially transverse course. Preferaby, in the first shoulder region the sixth sipes may be alternated in circumferential direction with the fourth transverse grooves at least in a 1-to-1 ratio. Preferably, in the second shoulder region the seventh sipes may be alternated in circumferential direction with the fifth transverse grooves at least in a 1-to-1 ratio.

Further features and advantages of the invention shall become clearer from the detailed description of some preferred, although not exclusive, embodiments of a high or ultra high performance car tyre, intended for use also on track, according to the present invention.

### Brief description of the drawings

Such description shall be made hereafter with reference to the accompanying drawings, provided only for indicating, and thus non-limiting, purposes, wherein:
- figure 1 shows a perspective view of an example of a tyre according to the invention;
- figure 2 is an enlarged view of a cross section of the tyre of figure 1;
- figure 3 is a schematic plan view of a tread band portion of the tyre of figure 1;
- figure 4 is a schematic plan view of a tread band portion of a second example of a tyre according to the invention.

### Detailed description of embodiments of the invention

With reference to the attached figures, a tyre for car wheels, in particular an "all season" tyre for wheels high or ultra high performance cars, is generally indicated at 100.

The structure of the tyre 100 is *per se* of conventional type and comprises a carcass, a tread band 7 placed in crown to the carcass, a pair of axially opposed sidewalls, ending in beads reinforced by bead cores and associated bead fillers. The tyre preferably also comprises a belt structure interposed between the carcass and the tread band. The carcass comprises one or more carcass plies anchored to the bead cores, whereas the belt structure comprises two radially superimposed belt strips. The belt strips are formed of pieces of a rubberized fabric incorporating metal cords parallel to one another in each strip and having a crossed orientation, preferably with a symmetrical inclination relative to the equatorial plane, relative to the cords of adjacent strips. Preferably, the belt structure also comprises, in a radially outer position, a third belt layer provided with cords oriented substantially parallel to the equatorial plane. Preferably, although not necessarily, the tyre according to the invention has a nominal section width of at least about 225, more preferably of at least about 245. For example, the tyre may have a nominal section width of 225, 245, 275, 295, 305, 315. Preferably, the tyre according to the invention has a reduced section height. For example, the section height may be smaller than or equal to 60%, more preferably smaller than or equal to 50%, of the nominal section width.

The tread band 7 has distribution of trasnsverse grooves and sipes, described in more detail below, which are arranged so as to obtain a predetermined void-to-rubber ratio. The tread band 7 has a reduced void-to-rubber ratio resulting from transverse grooves alone, so as to have an "all season" tyre, preferably a void-to-rubber ratio samaller than 0.30, more preferably smaller than 0.28.

Preferably, the void-to-rubber ratio of the tread band 7 resulting from transverse grooves alone is greater than 0.23, preferably greater than 0.24.

Instead, the void-to-rubber ratio of the tread band 7 resulting from transverse grooves and sipes is smaller than or equal to 0.33, preferably smaller than or equal to 0.30. Preferably, the void-to-rubber ratio of the tread band 7 resulting from sipes alone is smaller than or equal to 0.06.

Preferably, although not necessarily, the tyre according to the invention is of the asymmetrical type, i.e., the tread band pattern of the tyre on the right of the equatorial plane X-X is substantially different from that on the left. Therefore, the tyre 100 and/or the tread band 7 has an inner side to be preferably arranged, when fitted, towards the inside of the vehicle (on the right in the example shown in the figures) and an outer side to be preferably arranged towards the outside of the vehicle (on the left in the example shown in the figures).

The tread band 7 is provided with at least two circumferential grooves, respectively a first 1 and a second 2 circumferential groove, extending in a substantially circumferential direction.

The first and second circumferential grooves 1 and 2 respectively separate a central region L1 of the tread band 7 from a first shoulder region L2 and from a second shoulder region L3, respectively located to the left and right of the central region L1. In the embodiments shown in the figures the first shoulder region L2 is located on the outer side of the tyre, whereas the second shoulder region L3 is located on the inner side of the tyre.

The central region L1 extends across the equatorial X-X plane of the tyre. The first L2 and second L3 shoulder regions extend close to the axial ends of the tread band 7.

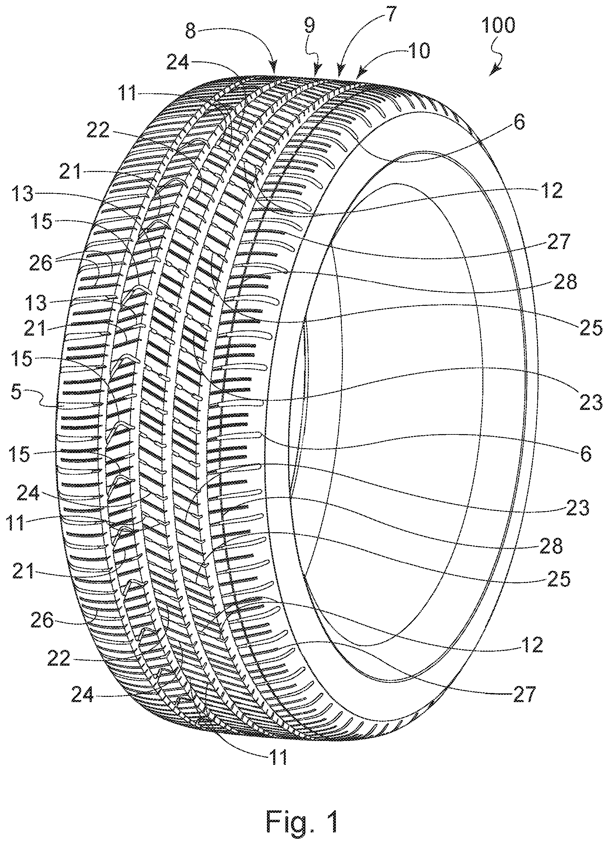

As exemplarily shown in the embodiments of figures 1-4, the central region L1 takes up a substantial portion of the tread band 7.

In particular, the central region L1 may have a width greater than or equal to 35% of the effective width of the tread band 7, i.e., the width of the tread band portion intended to contact the ground; the first shoulder region L2 may have a width smaller than 35% of the effective width of the tread band 7; the second shoulder region L3 may have a width smaller than 30% of the effective width of the tread band 7.

Moreover, the central region L1 may have a width smaller than or equal to 60% of the effective width of the tread band 7, the first shoulder region L2 may have a width greater than 20% of the effective width of the tread band 7, and the second shoulder region L3 may have a width greater than 20% of the effective width of the tread band 7. Preferably, the first shoulder rhnjegion L2 has a width substantially equal to the width of the second shoulder region L3.

The first circumferential groove 1 delimits the first shoulder region L2 from the central region L1 of the tread band 7 in axial direction, whereas the second circumferential groove 2 delimits the second shoulder region L3 from the central region L1 in axial direction.

Preferably, the first 1 and second 2 circumferential grooves have a substantially straight course in the circumferential direction, preferably over the whole circumferential development of the tyre.

The first circumferential groove 1 may have a different width as compared to the second circumferential groove 2.

In particular, as exemplarily shown in the embodiments of figures 1-4, the first circumferential groove 1 may have a width smaller than the width of the second circumferential groove 2. For example, the first circumferential groove 1 may have a width smaller than 90% of the width of the second circumferential groove 2, preferably greater than 60% of the width of the second circumferential groove 2.

The first and second circumferential grooves 1 and 2, together with the third 3 and fourth 4 circumferential grooves described in more detail below, are mainly provided for draining water from the footprint area.

The first circumferential groove 1 may, for example, have a width smaller than or equal to about 12 mm, preferably smaller than or equal to about 11 mm, preferably greater than or equal to about 6 mm.

The second circumferential groove 2 may, for example, have a width smaller than or equal to about 15 mm, preferably greater than or equal to about 8 mm.

Preferably, the first and second circumferential grooves 1 and 2 may have a depth smaller than or equal to about 10 mm, more preferably smaller than or equal to about 9 mm, preferably greater than or equal to about 5 mm. Preferably, the first circumferential groove 1 has a depth substantially equal to the depth of the second circumferential groove 2.

In all embodiments shown in figures 1-4, the tread band 1 further comprises, in the central region L1, a third 3 and a fourth 4 circumferential groove.

Preferably, the third 3 and the fourth 4 circumferential grooves have a substantially straight course in the circumferential direction, preferably over the whole circumferential development of the tyre.

Preferably, the third circumferential groove 3 has a width greater than the width of the first circumferential groove 1.

Preferably, the third circumferential groove 3 may have, for example, a width smaller than or equal to about 14 mm, preferably greater than or equal to about 8 mm.

The third circumferential groove 3 may have a depth smaller than or equal to about 10 mm, more preferably smaller than or equal to about 9 mm, preferably greater than or equal to about 5 mm.

Preferably, the fourth circumferential groove 4 has a width greater than the width of the first 1 and, more preferably, of the third circumferential groove 3.

Preferably, the fourth circumferential groove 4 may have a width smaller than or equal to about 15 mm, more preferably greater than or equal to about 8 mm.

The fourth circumferential groove 4 may have a depth smaller than or equal to about 10 mm, more preferably smaller than or equal to about 9 mm, preferably greater than or equal to about 5 mm.

Preferably, the width of the circumferential grooves increases when moving axially away from the first shoulder region L2 towards the second shoulder region L3. Preferably, the first 1, second 2, third 3, and fourth 4 circumferential grooves have substantially the same depth.

Still referring to the embodiments shown in figures 1-4, the first 1, second 2, third 3, and fourth 4 circumferential grooves are formed so as to have a straight section of a substantially trapezoidal shape.

The central L1 region is designed to maintain, as far as possible for an "all season" tyre, a high amount of rubber to the ground, and a distribution of grooves and sipes that keeps the stiffness of the tread band 7 as uniform as possible.

To this end, the central region L1 has a void-to-rubber ratio greater than about 0.24, preferably greater than about 0.26.

Preferably, the central region L1 has a void-to-rubber ratio lower than about 0.35.

In the embodiments shown in figures 1-4, the third circumferential groove 3 and the fourth circumferential groove 4 define, together with the first 1 and the second 2 circumferential grooves, a first 8, a second 9 and a third 10 circumferential rib in the central region L1.

In the tyre shown in figures 1-4, the first circumferential rib 8 is located between the first circumferential groove 1 and the third circumferential groove 3. The second circumferential rib 9 is located between the third circumferential groove 3 and the fourth circumferential groove 4, whereas the third circumferential rib 10 is located between the fourth circumferential groove 4 and the second circumferential groove 2.

Despite being an "all season" tyre, in order to increase the amount of "rubber to the ground" at the central region L1, thus optimising handling and rolling resistance, the central region L1 and particularly the circumferential ribs 8, 9, 10 are characterised by void-to-rubber ratios which are not high considering the contribution given by the transverse grooves located in this portion of the tread band 7 alone.

In particular, the circumferential ribs 8, 9, 10 are characterized by void-to-rubber ratios which are not high considering the contribution given respectively by the first 15, second 11, third 12, and possibly sixth 13 transverse grooves, described in more detail below, alone.

At least one of the first 8, second 9, and third 10 circumferential ribs, preferably all of them, have indeed a void-to-rubber ratio smaller than or equal to about 0.1, considering the contribution given respectively by the first 15, second 11, third 12, and possibly sixth 13 transverse grooves alone.

Preferably, the first 8, second 9, and third 10 circumferential ribs each have instead a void-to-rubber ratio equal to or smaller than 0.16 when considering the contribution respectively of the first 15, second 11, third 12, and possibly sixth 13 transverse grooves and the contribution respectively of the first 21, second 22, third 23, fourth 24, and fifth 25 sipes.

Preferably, the contribution to the void-to-rubber ratio in each of the first 8, second 9, and third 10 circumferential ribs given by the first 21 and/or second 22 and/or third 23 and/or fourth 24 and/or fifth 25 sipes alone is therefore smaller than or equal to 0.06. Preferably, for this purpose, the first circumferential rib 8 has a plurality of first transverse grooves 15 alternated with a plurality of first transverse sipes 21 in circumferential direction.

Preferably, the first transverse grooves 15 extend over at least 90% of the width of the first circumferential rib 8.

Preferably, the first transverse grooves 15 extend over 100% of the width of the first circumferential rib 8, that is, the first transverse grooves 15 extend from the first circumferential rib 1 to the third circumferential rib 3.

The first transverse grooves 15 have at least one first segment 15', at least one second segment 15'' counter-inclined relative to the first segment 15', and at least one connecting third segment 15‴ located between the first segment 15' and the second segment 15''.

The first segment 15' and the second segment 15'' respectively have a straight course, whereas the third segment 15‴ has a curvilinear course.

The first segment 15' extends from the first circumferential groove 1 up to reaching the third segment 15‴, whereas the second segment 15" extends from the third circumferential groove 3.

Preferably, the first segment 15' has an inclined course relative to a direction parallel to the equatorial plane X-X so as to form an angle θ smaller than or equal to 70°.

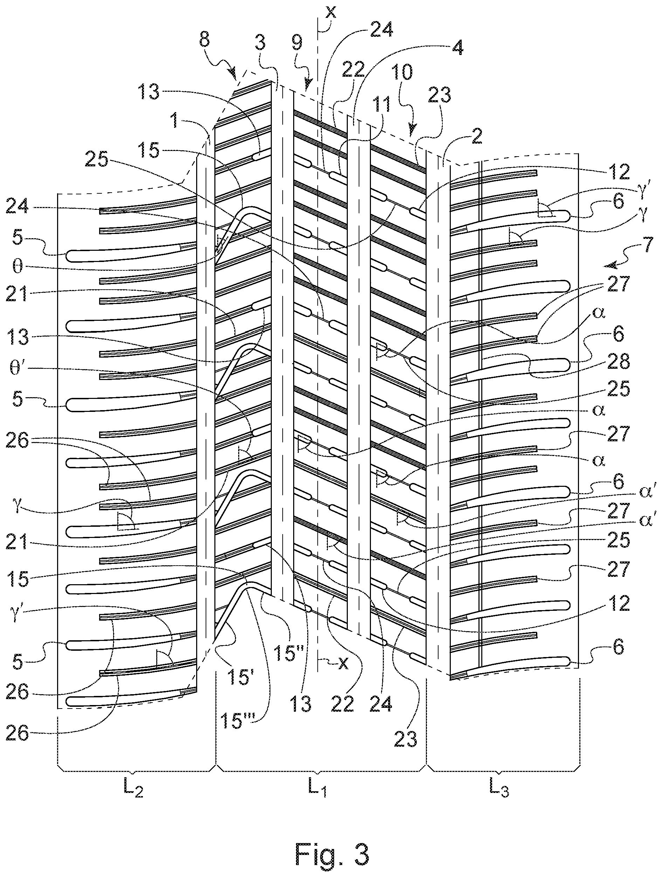

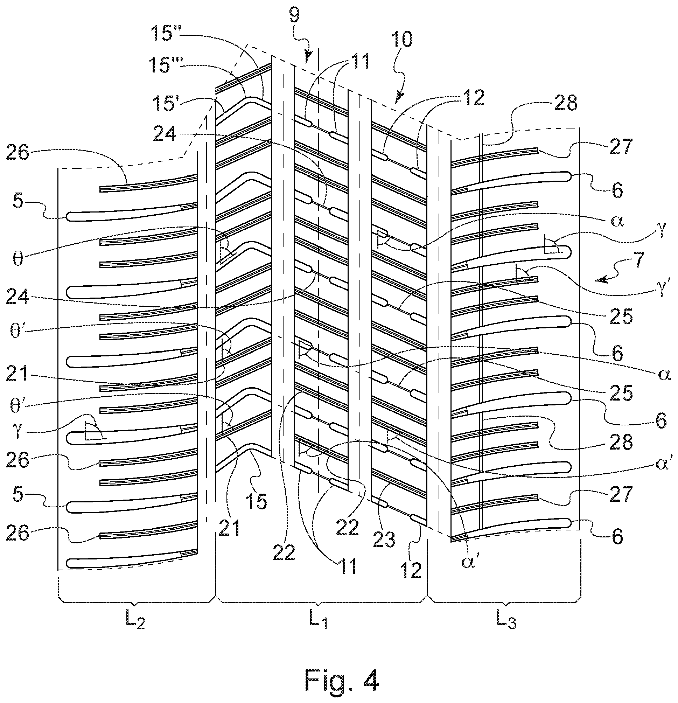

In the embodiment shown in figure 3, the first segment 15' has an inclined course relative to a direction parallel to the equatorial plane X-X so as to form an angle θ smaller than or equal to 45°. In the embodiment shown in figure 4, the first segment 15' has an inclined course relative to a direction parallel to the equatorial plane X-X so as to form an angle θ smaller than or equal to 60°.

Preferably, the second segment 15'', which is counter-inclined relative to the first segment 15', has an inclined course relative to a direction parallel to the equatorial plane X-X so as to form an angle θ" greater than or equal to 45°, preferably greater than or equal to 50°.

The first transverse grooves 15 have a maximum width greater than about 2 mm. Preferably, the first transverse grooves 15 have a maximum width smaller than about 7 mm. For example, they may have a maximum width of between about 2 and about 5 mm.

The first transverse grooves 15 may have, as in the examples shown in figures 1-4, a substantially constant width along their extension.

The first transverse grooves 15 have a maximum depth smaller than or equal to about 9 mm, more preferably smaller than or equal to about 8 mm, in any case greater than or equal to about 5 mm.

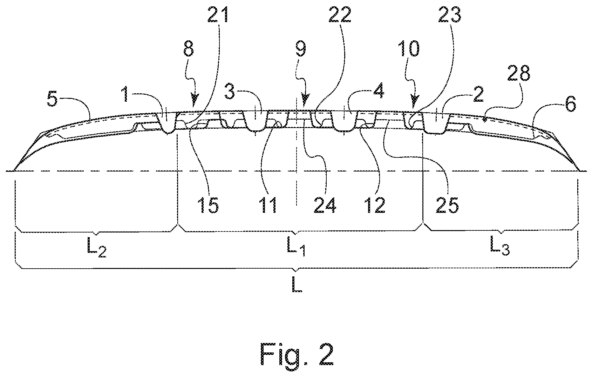

Preferably, the first transverse grooves 15 do not have a constant depth along their extension but, as best shown in figure 2, have a minimum depth at their central portion. In order to improve behavior on snow, the first circumferential rib 8 has a plurality of first sipes 21.

In particular, the contribution to the void-to-rubber ratio in the first circumferential rib 8 given by the first sipes 21 is thus smaller than or equal to 0.06.

The first sipes 21 extend over at least 60% of the width of the first circumferential rib 8 where they are located.

In the embodiments shown in the figures, some first sipes 21 extend over 100% of the width of the first circumferential rib 8 where they are located.

In other words, said first sipes 21 extend on the first circumferential rib 8 from the first circumferential groove 1 to the third circumferential groove 3.

Preferably, the first sipes 21 have a straight course, substantially over their whole extension.

In the embodiments shown in the figures, the first sipes 21 have a substantially straight course, suitable for forming an angle θ' with the equatorial plane X-X.

The angle θ' is concordant with the angle θ formed by the course of the first segment 15' of the first transverse grooves 15 with the equatorial plane X-X. The angle θ' is greater than the angle θ formed by the course of the first segment 15' of the first transverse grooves 15 with the equatorial plane X-X.

Preferably, the first sipes 21 all have substantially the same inclination. Preferably, the first sipes 21 are substantially parallel to each other over at least 80% of their extension. In the embodiment shown in the figures, the first sipes 21 are substantially parallel to one another over 100% of their extension.

Preferably, the first sipes 21 do not have mutual intersection points.

Preferably, the first sipes 21 have a minimum distance from one another in circumferential direction greater than or equal to 6 mm.

In the embodiment shown in figure 4, the first sipes 21 do not have mutual intersection points even with the first transverse grooves 15, whereas in the embodiment shown in figures 1 and 3, the first sipes 21 do have intersection points with the first transverse grooves 15.

In the first circumferential rib 8, the first sipes 21 are alternated in circumferential direction with the first transverse grooves 15.

Preferably, in the first circumferential rib 8, the first sipes 21 are alternated in circumferential direction with the first transverse grooves 15 at least in a 1-to-1 ratio. In particular, in the embodiment shown in figures 1 and 3, in the first circumferential rib 8 the first sipes 21 are alternated in circumferential direction with the first transverse grooves 15 at least in a 4-to-1 ratio.

In the embodiment shown instead in figure 4, in the first circumferential rib 8 the first sipes 21 are alternated in circumferential direction with the first transverse grooves 15 in a 1-to-1 or 2-to-1 ratio.

The first sipes 21 may have, as in the examples shown in figures 3, 4, a substantially constant width along their extension.

The first sipes 21 have a maximum width of smaller than 2 mm. Preferably, the first sipes 21 have a maximum width of between 0.4 and 1.5 mm.

Preferably, the first sipes 21 do not have a constant depth along their extension but, as best shown in higure 2, have a maximum depth at their central portion and at least two respective depth reductions at their ends.

Preferably, the first sipes 21 have a maximum depth greater than about 5 mm. Preferably, the first sipes 21 have a maximum depth smaller than about 9 mm. Preferably, the maximum depth of the first sipes 21 is smaller than the maximum depth of the first and third circumferential grooves 1, 3.

In the embodiment of figures 1-3, the first rib 8 further has sixth transverse grooves 13. The sixth transverse grooves 13 may have an extension equal to at most 40% of the width of the first rib 8 where they are located.

Preferably, the sixth transverse grooves 13 may have an extension equal to at most 30% of the width of the first rib 8 where they are located.

In the embodiment shown in figures 1-3, the sixth transverse grooves 13 extend on the continuation of a respective first sipe 21.

In particular, again with reference to the embodiment shown in Figures 1-3, the sixth transverse grooves 13 extend from one end of a respective first lamella 21 to the third circumferential groove 3.

In the embodiment shown in Figures 1-3, only some of the first slats 21 are joined to sixth grooves 13.

Preferably, the sixth transverse groove 13 have a width greater than about 2 mm. Preferably, the sixth transverse grooves 13 have a width of smaller than about 7 mm. For example, they may have a width of between about 2 and about 5 mm.

The sixth transverse grooves 13 have a maximum depth of smaller than or equal to about 9 mm, more preferably smaller than or equal to about 8 mm, preferably greater than or equal to about 5 mm.

Preferably, the sixth transverse grooves 13 have a constant depth along their extension. In particular, the second rib 9 comprises a plurality of second transverse grooves 11, arranged in pairs along the circumferential development of the tyre, and a plurality of second transverse sipes 22.

Each of the second transverse grooves 11 of said pairs may have an extension equal to at most 40% of the width of the second rib 9 where they are located.

Preferably, each of the second transverse grooves 11 of said pairs may have an extension equal to at most 30% of the width of the second rib 9 where they are located.

The second transverse grooves 11 may extend from a circumferential groove adjacent to the second central rib 9 where they are located.

Advantageously, the second transverse grooves 11 of the same pair extend from two different circumferential grooves adjacent to the second central rib 9 where they are located.

In particular, in the embodiments shown in figures 3 and 4, a second transverse groove 11 extends starting from the third circumferential groove 3, whereas the remaining second transverse groove 11 of the same pair extends starting from the fourth circumferential groove 4.

The second transverse grooves 11 preferably have a straight course.

Preferably, in a same pair of second transverse grooves 11, a second transverse groove 11 extends on the continuation of the remaining second transverse groove 11.

In the embodiments shown in the figures, the second transverse grooves 11 have an inclined course relative to a direction parallel to the equatorial plane X-X so as to form an angle α greater than or equal to 45°, preferably greater than or equal to 50°.

Preferably, the second transverse grooves 11 may be counter-inclined relative to the first segment 15' of the first transverse grooves 15.

In the embodiments shown in the figures, the second transverse grooves of a same pair extend on the continuation of the second segment 15" of the first transverse grooves 15. Preferably, the second transverse grooves 11 have a width greater than about 2 mm. Preferably, the second transverse grooves 11 have a width of smaller than about 7 mm. For example, they may have a width of between about 2 and about 5 mm.

In the embodiments shown in figures 3 and 4, the second transverse grooves 11 have a width substantially equal to the width of the first transverse grooves 15.

The second transverse grooves 11 may have a maximum depth smaller than or equal to about 9 mm, more preferably smaller than or equal to about 8 mm, preferably greater than or equal to about 5 mm. The second transverse grooves 11 may have a constant depth along the respective extension.

Conveniently, as shown for example in the embodiments of figures 3 and 4, the second transverse grooves 11 of a same pair may be connected by a respective fourth sipe 24, described in more detail below.

In order to improve the behaviour on snow, the second circumferential rib 9 further has a plurality of second sipes 22 with a substantially transverse course.

Preferably, the second transverse sipes 22 extend over at least 80% of the width of the second circumferential rib 9.

Preferably, the second transverse sipes 22 extend over 100% of the width of the second circumferential rib 9.

In other words, referring to the embodiments shown in the figures, the second transverse sipes 22 extend strating from the third circumferential groove 3 up to the fourth circumferential groove 4.

Preferably, the second transverse sipes 22 have a straight course.

The second sipes 22 have an inclined course relative to a direction parallel to the equatorial plane X-X so as to form an angle α' greater than or equal to 45°, preferably greater than or equal to 50°.

Preferably, the second sipes 22 are counter-inclined relative to the first segment 15' of the first transverse grooves 15.

Preferably, the second sipes 22 do not have mutual intersection points and/or intersection points with the second transverse grooves 11.

Preferably, the second sipes 22 are substantially parallel to the second transverse grooves 11.

In the embodiment shown in the figures, the second sipes 22 are alternated in circumferential direction with the second transverse grooves 11 at least in a 1-to-1 ratio. Preferably, at least some of the second sipes 22 are alternated in circumferential direction with the second transverse grooves 11 in a 2-to-1 ratio.

Preferably, the second sipes 22 have a width equal to or smaller than about 2 mm. Preferably, they have a maximum width of between 0.4 and 1.5 mm.

The second sipes 22 may have, as in the examples shown in the figures, a substantially constant width along their extension.

Preferably, the second sipes 22 have a maximum depth greater than about 5 mm. The second sipes 22 have a maximum depth smaller than about 9 mm.

Preferably, the second sipes 22 do not have a constant depth along their extension but, as best shown in Figure 2, have a maximum depth at their central portion and at least two respective depth reductions at their ends.

Preferably, the maximum depth of the second sipes 22 is smaller than the maximum depth of the third 3 and fourth 4 circumferential grooves.

As previously mentioned, the second central rib further has fourth sipes 24.

The fourth sipes 24 are arranged so as to connect two second transverse grooves 11 of a same pair.

The fourth sipes 24 are thus arranged on the continuation of the second transverse grooves 11 and extend starting from a second transverse groove 11 up to the remaining transverse groove 11 of the same pair.

The fourth sipes 24 are parallel to the second sipes 11.

The fourth sipes 24 have a width equal to or smaller than 2 mm.

For example, they may have a width of between about 0.4 and about 1.5 mm.

In the embodiments shown in figures 3 and 4, the fourth sipes 24 have a substantially constant width along their extension.

Preferably, the fourth sipes 24 have a maximum depth greater than about 2 mm.

Preferably, the fourth sipes 24 have a maximum depth smaller than about 9 mm.

Preferably, the fourth sipes 24 have a constant depth along the respective extension.

The third rib 10 has substantially the same void-to-rubber ratio as the second central rib 9.

In particular, the third rib 10 comprises a plurality of third transverse grooves 12, arranged in pairs along the circumferential development of the tyre, and a plurality of third sipes 23.

Each of the third transverse grooves 12 of said pairs may have an extension equal to at most 40% of the width of the second rib 9 where they are located.

Preferably, each of the third transverse grooves 12 of said pairs may have an extension equal to at most 30% of the width of the third rib 10 where they are located.

The third transverse grooves 12 may extend starting from one of the circumferential grooves adjacent the third central rib 10.

Advantageously, the third transverse grooves 12 of a same pair extend starting from two different circumferential grooves adjacent to the third central rib 10 where they are located.

In particular, in the embodiments shown in figures 3 and 4, a third transverse groove 12 extends from the fourth circumferential groove 4, whereas the remaining third transverse groove 12 of the same pair extends from the second circumferential groove 2.

The third transverse grooves 12 preferably have a straight course.

Preferably, in the pairs of third transverse grooves 12, a third transverse groove 12 extends on the continuation of the remaining third transverse groove 12.

In the embodiments shown in figures 3 and 4, the third transverse grooves 12 have an inclined course relative to a direction parallel to the equatorial plane X-X so as to form an angle α greater than or equal to 45°, preferably greater than or equal to 50°.

Preferably, the third transverse grooves 12 are counter-inclined relative to the first segment 15' of the first transverse grooves 15.

In the embodiments shown in figures 3 and 4, the third transverse grooves 12 of a same pair extend on the continuation of the second transverse grooves 11.

Preferably, the third transverse grooves 12 have a width greater than about 2 mm. Preferably, the third transverse grooves 12 have a width smaller than about 7 mm. For example, they may have a width of between about 2 and about 5 mm.

In the embodiments shown in figures 3 and 4, the third transverse grooves 12 have a width substantially equal to the width of the second transverse grooves 11.

The third transverse grooves 12 have a maximum depth smaller than or equal to about 9 mm, more preferably smaller than or equal to about 8 mm, preferably greater than or equal to about 5 mm. The third transverse grooves 12 may have a constant depth along the respective extension.

Conveniently, as shown for example in the embodiments of figures 3 and 4, the third transverse grooves 12 of a same pair may be connected by a respective fifth sipe 25, described in more detail below.

In order to improve the behaviour on snow, the third circumferential rib 10 further has a plurality of third sipes 23 having a substantially transverse course. In particular, the contribution to the void-to rubber ratio in the third circumferential rib 10 provided by the third 23 and fifth 25 sipes is smaller than or equal to 0.06.

Preferably, the third transverse sipes 23 extend over at least 80% of the width of the third circumferential rib 10.

Preferably, the third transverse sipes 23 extend over 100% of the width of the third circumferential rib 10.

In other words, referring to the embodiments shown in the figures, the third sipes 23 extend starting from the fourth circumferential groove 4 up to the second circumferential groove 2.

Preferably, the third sipes 23 have a straight course.

The third sipes 23 have an inclined course relative to a direction parallel to the equatorial plane X-X so as to form an angle α' greater than or equal to 45°, preferably greater than or equal to 50°.

Preferably, the third sipes 23 are counter-inclined relative to the first segment 15' of the first transverse grooves 15.

Preferably, the third sipes 23 do not have mutual intersection points and/or intersection points with the third transverse grooves 12.

Preferably, the third sipes 23 are substantially parallel to the third transverse grooves 12.

Preferably, the third sipes 23 extend on the continuation of the second sipes 22.

In the embodiment shown in the figures, the third sipes 23 are alternated in circumferential direction with the third transverse grooves 12 at least in a 1-to-1 ratio.

Preferably, at least some of the third sipes 23 are alternated in circumferential direction with the third transverse grooves 12 in a 2-to-1 ratio. Preferably, the third sipes 23 have a width equal to or smaller than about 2 mm.

Preferably, they may have a width of between about 0.4 and 1.5 mm.

The third sipes 23 may have, as in the examples shown in the figures, a substantially constant width along their extension.

Preferably, the third sipes 23 have a maximum depth greater than about 5 mm. The third sipes 23 have a maximum depth smaller than about 9 mm.

Preferably, the third sipes 23 do not have a constant depth along their extension but, as best shown in Figure 2, have a maximum depth at their central portion and at least two respective depth reductions at their ends.

The fifth sipes 25 are arranged so as to conenct two third transverse grooves 12 of the same pair.

The fifth sipes 25 are thus disposed on the continuation of the third transverse grooves 12 and extend from a third transverse groove 12 to the remaining third transverse groove 12 of the same pair.

The fifth sipes 25 are parallel to the third sipes 12.

The fifth sipes 25 have a width equal to or smaller than about 2 mm.

For example, they may have a width of between about 0.4 and about 1.5 mm.

In the embodiments shown in figures 3 and 4, the fifth sipes 25 have a substantially constant width along their extension.

Preferably, the fifth sipes 25 have a maximum depth greater than about 2 mm.

Preferably, the fifth sipes 25 have a maximum depth smaller than about 9 mm.

Preferably, the fifth sipes 25 have a constant depth along the respective extension.

The first and second circumferential grooves 1 and 2 identify on the tread band 1 the first shoulder region L2 and the second shoulder region L3, respectively located to the left and right of the central region L1.

Preferably, the first shoulder region L2 and/or the second shoulder region L3 have a void-to-rubber ratio provided by grooves and sipes smaller than or equal to about 0.35, preferably smaller than or equal to about 0.32. Preferably, the first shoulder region L2 and/or the second shoulder region L3 have a void-to-rubber ratio greater than or equal to about 0.20, preferably greater than or equal to about 0.22.

In particular, the first shoulder region L2 comprises a plurality of fourth transverse grooves 5 and a plurality of sixth sipes 26.

The fourth transverse grooves 5 have a substantially transverse course or a course slightly inclined relative to the axial direction.

In particular, the course of the fourth transverse grooves 5 forms with the equatorial plane X-X an angle γ of between 75° and 90° in absolute value.

Preferably, the fourth transverse grooves 5 have a maximum width greater than or equal to about 4 mm. Preferably, the fourth transverse grooves 5 have a maximum width smaller than or equal to about 8 mm, preferably smaller than or equal to about 7 mm. The fourth transverse grooves 5 may have, as in the examples shown in figures 1-4, a substantially increasing width moving away from the equatorial plane X-X.

The fourth transverse grooves 5 may have a depth that is not constant along the respective extension, for example a depth that decreases, preferably gradually, moving towards the axially outer edges of the tyre.

Each fourth transverse groove 5 preferably has a maximum depth of at least about 3 mm and smaller than about 8 mm.

The fourth transverse grooves 5 preferably have a first end located substantially at the first circumferential groove 1, and extend from said end in a substantially axial direction over at least 50% of the width of the first shoulder region L2.

In the embodiments shown in the figures, the fourth transverse grooves 5 of the first shoulder region L2 may have an extension equal to at least 70% of the width of the first shoulder region L2.

Preferably, the fourth transverse grooves 5 of the first shoulder region L2 may have an extension equal to at least 80% of the width of the first shoulder region L2, but in any case, equal to or smaller than 90% of the width of the first shoulder region L2.

Moreover, the first shoulder region L2 has a plurality of sixth sipes 26 with a substantially transverse course which also extend starting from the first circumferential groove 1.

The sixth sipes 26 have a substantially transverse course or a course slightly inclined relative to the axial direction.

In particular, the course of the sixth sipes 26 forms with the equatorial plane X-X an angle γ' of between 75° and 90° in absolute value

The sixth sipes 26 may have an extension equal to 50% of the width of the first shoulder region L2.

Preferably, the sixth sipes 26 have a course parallel to the course of the fourth transverse grooves 5 over at least 50% of their extension, preferably over at least 80% of their extension, even more preferably over their whole extension.

The sixth sipes 26 may have, as in the examples shown in the figures, a substantially constant width along their extension.

The sixth sipes 26 have a width smaller than or equal to about 2 mm.

Preferably, the sixth sipes 26 may have a width of between 0.4 and 1.5 mm.

The sixth sipes 26 may have a maximum depth smaller than 9 mm.

The sixth sipes 26 may have a maximum depth greater than or equal to about 4 mm.

In the embodiment shown in the figures, the sixth sipes 26 are alternated in circumferential direction with the fourth transverse grooves 5 at least in a 1-to-1 ratio. Preferably, the sixth sipes 26 are alternated in circumferential direction with the fourth transverse grooves 5 at least in a 2-to-1 ratio.

In the embodiments shown in the figures, the sixth sipes 26 are alternated in circumferential direction with the fourth transverse grooves 5 in a variable ratio.

In other words, in the circumferential direction some of the sixth sipes 26 are alternated with the fourth transverse grooves 5 in a 1-to-1 ratio, whereas others, namely the majority, are alternated with the fourth transverse grooves 5 in a 2-to-1 ratio.

In particular, the second shoulder region L3 comprises a plurality of fifth transverse grooves 6, a plurality of seventh sipes 27, and a circumferential sipes 28.

The second shoulder region L3 thus comprises at least fifth transverse grooves 6 and seventh sipes 27 repeating circumferentially.

Preferably, the fifth transverse grooves 6 have a straight course.

The fifth transverse grooves 6 have a substantially transverse course or a course slightly inclined with respect to the axial direction.

In particular, the course of the fifth transverse grooves 6 forms with the equatorial plane X-X an angle γ of between 75° and 90° in absolute value.

The fifth transverse grooves 6 preferably have a maximum width greater than or equal to about 4 mm. Preferably, the fifth transverse grooves 6 have a maximum width smaller than or equal to about 8 mm, preferably smaller than or equal to about 7 mm.

The fifth transverse grooves 6 may have, as in the examples shown in figures 1-4, a substantially increasing width as they move away from the equatorial plane X-X.

The fifth transverse grooves 6 may have a depth that is not constant over the respective extension, for example a depth that decreases, preferably gradually, moving towards the axially outer edges of the tyre.

Each fifth transverse groove 6 preferably has a maximum depth of at least about 3 mm and smaller than about 8 mm.

The fifth transverse grooves 6 preferably have a first end located substantially at the second circumferential groove 2, and extend starting from said end in a substantially axial direction over at least 50% of the width of the second shoulder region L3.

In the embodiments shown in the figures, the fifth transverse grooves 6 of the second shoulder region L3 may have an extension equal to at least 70% of the width of the second shoulder region L3.

Preferably, the fifth transverse grooves 6 of the second shoulder region L3 may have an extension equal to at least 80% of the width of the second shoulder region L3, but, in any case, equal to or smaller than 90% of the width of the second shoulder region L3. The number of fourth transverse grooves 5 of the first shoulder region L2 is substantially the same as the number of fifth transverse grooves 6 of the second shoulder region L3. Preferably, the fifth transverse grooves 6 of the second shoulder region L3 are circumferentially staggered relative tothe fourth transverse grooves 5 of the first shoulder region L2.

The second shoulder region L3, as shown in the embodiments shown in the Figures, has a plurality of seventh sipes 27 with a substantially transverse course, that also extend from the second circumferential groove 2.

The seventh sipes 27 have a substantially transverse course or a course slightly inclined relative to the axial direction.

In particular, the course of the seventh sipes 27 forms with the equatorial plane X-X an angle γ' of between 75° and 90° in absolute value

The seventh sipes 27 may have an extension equal to 50% of the width of the second shoulder region L3.

The seventh sipes 27 are parallel to one other and parallel to the fifth transverse grooves 6.

Preferably, the seventh sipes 27 have a course parallel to the course of the fifth transverse grooves 6 over at least 50% of their extension, preferably over at least 80% of their extension, even more preferably over their whole extension.

The seventh sipes 27 may have, as in the examples shown in the figures, a substantially constant width along their extension.

The seventh sipes 27 have a maximum width smaller than 2 mm.

Preferably, the seventh sipes 27 may have a maximum width of between 0.4 and 1.5 mm.

The seventh sipes 27 may have a maximum depth greater than or equal to about 4 mm. In the embodiment shown in the figures, the seventh sipes 27 are alternated in circumferential direction with the fifth transverse grooves 6, at least in a 1-to-1 ratio. Preferably, the seventh sipes 27 are alternated in circumferential direction with the fifth transverse grooves 6 at least in a 2-to-1 ratio.

In the embodiments shown in the figures, the seventh sipes 27 are alternated in circumferential direction with the fifth transverse grooves 6 in a variable ratio.

In other words, in the circumferential direction some of the seventh sipes 27 are alternated with the fifth transverse grooves 6 in a 1-to-1 ratio, whereas others, namely the majority, are alternated with the fifth transverse grooves 6 in a 2-to-1 ratio. In the embodiment shown in the figures, the second shoulder region is further provided with a circumferential sipe 28 extending substantially over the whole circumferential development of the tyre.

The circumferential sipe 28 has a substantially straight course in the circumferential direction, preferably over the whole circumferential development of the tyre.

The circumferential sipe28 may have, for example, a width smaller than or equal to about 2 mm, in any case greater than or equal to about 1 mm.

The circumferential sipe 28 may have, for example, a constant width substantially over the whole circumferential development of the tyre.

Preferably, the circumferential sipe 28 may have a depth smaller than or equal to about 5 mm, preferably smaller than or equal to 3 mm, in any case greater than or equal to about 1 mm.

The sipes on the tread band 7 may have at least one radially outer edge, i.e., the edge connecting the substantially radial wall of the sipe and the respectively adjacent radially outer surface of the tread band 7, beveled.

In the embodiments shown in the figures, the first 21, second 22, third 23, sixth 26 and seventh 27 sipes have both radially outer edges beveled.

In a straight section, the bevels may be straight or curved and may affect the sipe over a depth of at most 1.5 mm, preferably 1 mm.

In the embodiments shown in the figures, the bevels are straight and their course forms with the substantially radial wall of the sipe an angle of about 45°.

Various modifications may be made to the embodiments described herein in detail, while remaining within the scope of protection of the invention, as defined by the following claims.

## Claims

1. Car tyre (100) having a tread band (7) comprising a central region (L1), extending across an equatorial plane (X-X), and two shoulder regions (L2, L3), which are separated from the central region by a first circumferential groove (1), axially delimiting a first shoulder region (L2) from the central region (L1), and a second circumferential groove (2), axially delimiting a second shoulder region (L3) from the central region (L1);
- said central region (L1) having a width greater than or equal to at least 35% of an effective width (L) of said tread band (7);
- said central region (L1) having a plurality of ribs (8, 9, 10) comprising respective pluralities of transverse grooves and sipes; said plurality of ribs (8, 9, 10) comprising at least one first rib (8) comprising a plurality of first transverse grooves (15);
- said first transverse grooves (15) extending over at least 90% of the width of said first rib (8);
- each first transverse groove (15) comprising a substantially straight first segment (15'), inclined relative to a direction parallel to said equatorial plane (X-X) so as to form an angle θ smaller than or equal to 70°, a substantially straight second segment (15"), counter-inclined relative to said first segment (15'), and a curvilinear connecting segment (15‴) extending between said first segment (15') and said second segment (15");
- said tread band (7) further comprising a plurality of sipes (21, 22, 23, 24, 25) comprising a plurality of first sipes (21) located in said first rib (8) between said first transverse grooves (15); caracterized in that
- said first sipes (21) extending over at least 60% of the width of said first rib (8);
- said first sipes (21) having a substantially straight course forming with said equatorial plane (X-X) an angle θ' concordant with said angle θ; said first sipes (21) have a substantially straight course forming with said equatorial plane (X-X) an angle θ' greater than said angle θ.
- said first sipes (21) having no mutual intersection points.

2. Tyre (100) according to claim 1, **characterized in that** at least some of said first sipes (21) extend over the whole width of said first rib (8).

3. Tyre (100) according to claim 1 or 2, **characterized in that** said first transverse grooves (15) extend over the whole width of said first rib (8).

4. Tyre (100) according to any one of the previous claims, **characterized in that** said central region (L1) comprises a third (3) and/or a fourth (4) circumferential groove axially delimiting at least a second and/or a third circumferential rib (9, 10), said second and/or third circumferential ribs (9, 10) respectively comprising a plurality of pairs of second and/or third transverse grooves (11, 12).

5. Tyre (100) according to claim 4, **characterized in that** the second and/or third transverse grooves (11, 12) of said pairs of second and/or third transverse grooves (11, 12) extend over at most 40% of the width of the rib (9, 10) where they are located.

6. Tyre (100) according to any one of claims 4 or 5, **characterized in that** said second and/or third transverse grooves (11, 12) extend from a circumferential groove which is adjacent to the rib (9, 10) where they are located.

7. Tyre (100) according to any one of claims 4 to 6, **characterized in that** said second and/or third transverse grooves (11, 12) of each pair extend starting from two different circumferential grooves which are adjacent to the rib (9, 10) where they are located.

8. Tyre (100) according to any one of claims 4 to 7, **characterized in that** said second and/or third transverse grooves (11, 12) are counter-inclined relative to said first segment (15') of said first transverse grooves (15).

9. Tyre (100) according to any one of claims 4 to 8, **characterized in that** in said pairs of second and/or third transverse grooves (11, 12) a second and/or a third transverse groove extends on the prolongation of the remaining second and/or third circumferential groove.

10. Tyre (100) according to any one of claims 4 to 9, **characterized in that** the course of said second and/or third transverse grooves (11, 12) forms with said equatorial plane (X-X) an angle α greater than or equal to 45°.

11. Tyre (100) according to any one of claims 4 to 10, **characterized in that** said second and/or third circumferential ribs (9, 10) respectively comprise a plurality of second and/or third sipes (22, 23) having a substantially transverse course.

12. Tyre (100) according to any one of claim 11, **characterized in that** said second and/or third sipes (22, 23) have a substantially straight course.

13. Tyre (100) according to claims 11 or 12, **characterized in that** said second and/or third sipes (22, 23) are counter-inclined relative to said first segment (15') of said first transverse grooves (15).

14. Tyre (100) according to any one of claims 11 to 13, **characterized in that** said second and/or third sipes (22, 23) respectively have a course substantially parallel to the course of said second and/or third transverse grooves (11, 12).

15. Tyre (100) according to any one of claims 4 to 14, **characterized in that** said second and/or third transverse grooves (11, 12) of each pair are connected by a fourth (24) and/or a fifth sipe (25).

16. Tyre (100) according to claim 15, **characterized in that** said fourth (24) and/or fifth sipes (25) have a course substantially parallel to the course of said second and/or third transverse grooves (11, 12) and/or of said second and/or third sipes (22, 23).

17. Tyre (100) according to any one of claims 4 to 16, **characterized in that** the second and/or third transverse grooves (11, 12) of each pair lie on the continuation of said second segment (15") of said first transverse grooves (15).

## Patentansprüche

1. Autoreifen (100), der ein Laufflächenband (7) aufweist, das einen mittleren Bereich (L1), der sich über eine Äquatorialebene (X-X) erstreckt, und zwei Schulterbereiche (L2, L3) umfasst, die von dem mittleren Bereich durch eine erste umlaufende Nut (1), die einen ersten Schulterbereich (L2) axial von dem mittleren Bereich (L1) begrenzt, und eine zweite umlaufende Nut (2) getrennt ist, die einen zweiten Schulterbereich (L3) axial von dem mittleren Bereich (L1) begrenzt;
- wobei der mittlere Bereich (L1) eine Breite größer oder gleich mindestens 35 % einer effektiven Breite (L) des Laufflächenbands (7) aufweist;
- wobei der mittlere Bereich (L1) eine Vielzahl von Rippen (8, 9, 10) aufweist, die jeweilige Vielzahlen von Quernuten und Lamellen umfassen; wobei die Vielzahl von Rippen (8, 9, 10) mindestens eine erste Rippe (8) umfasst, die eine Vielzahl erster Quernuten (15) umfasst;
- wobei sich die ersten Quernuten (15) über mindestens 90 % der Breite der ersten Rippe (8) erstrecken;
- wobei jede erste Quernut (15) ein im Wesentlichen gerades erstes Segment (15'), das relativ zu einer Richtung parallel zu der Äquatorialebene (X-X) geneigt ist, um einen Winkel θ kleiner oder gleich 70° zu bilden, ein im Wesentlichen gerades zweites Segment (15"), das relativ zu dem ersten Segment (15') gegenläufig ist, und ein krummliniges Verbindungssegment (15‴), das sich zwischen dem ersten Segment (15') und dem zweiten Segment (15") erstreckt, umfasst;
- wobei das Laufflächenband (7) weiter eine Vielzahl von Lamellen (21, 22, 23, 24, 25) umfasst, die eine Vielzahl von ersten Lamellen (21) umfassen, die sich in der ersten Rippe (8) zwischen den ersten Quernuten (15) befinden; **dadurch gekennzeichnet, dass**
- sich die ersten Lamellen (21) über mindestens 60 % der Breite der ersten Rippe (8) erstrecken;
- die ersten Lamellen (21) einen im Wesentlichen geraden Verlauf aufweisen, der mit der Äquatorialebene (X-X) einen Winkel θ' bildet, der mit dem Winkel θ übereinstimmt; die ersten Lamellen (21) einen im Wesentlichen geraden Verlauf aufweisen, der mit der Äquatorialebene (X-X) einen Winkel θ' bildet, der größer als der Winkel θ ist.
- die ersten Lamellen (21) keine gemeinsamen Schnittpunkte aufweisen.

2. Reifen (100) nach Anspruch 1, **dadurch gekennzeichnet, dass** sich mindestens einige der ersten Lamellen (21) über die gesamte Breite der ersten Rippe (8) erstrecken.

3. Reifen (100) nach Anspruch 1 oder 2, **dadurch gekennzeichnet, dass** sich die ersten Quernuten (15) über die gesamte Breite der ersten Rippe (8) erstrecken.

4. Reifen (100) nach einem der vorstehenden Ansprüche, **dadurch gekennzeichnet, dass** der mittlere Bereich (L1) eine dritte (3) und/oder eine vierte (4) umlaufende Nut umfasst, die mindestens eine zweite und/oder eine dritte umlaufende Rippe (9, 10) begrenzt, wobei die zweite und/oder dritte umlaufende Rippe (9, 10) jeweils eine Vielzahl von Paaren zweiter und/oder dritter Quernuten (11, 12) umfassen.

5. Reifen (100) nach Anspruch 4, **dadurch gekennzeichnet, dass** die zweiten und/oder dritten Quernuten (11, 12) der Paare zweiter und/oder dritter Quernuten (11, 12) sich über höchstens 40 % der Breite der Rippe (9, 10), wo sie sich befinden, erstrecken.

6. Reifen (100) nach einem der Ansprüche 4 oder 5, **dadurch gekennzeichnet, dass** die zweiten und/oder dritten Quernuten (11, 12) sich von einer umlaufenden Nut erstrecken, die an die Rippe (9, 10), wo sie sich befinden, angrenzt.

7. Reifen (100) nach einem der Ansprüche 4 bis 6, **dadurch gekennzeichnet, dass** die zweiten und/oder dritten Quernuten (11, 12) jedes Paares sich ausgehend von zwei unterschiedlichen umlaufenden Nuten erstrecken, die an die Rippe (9, 10), wo sie sich befinden, angrenzen.

8. Reifen (100) nach einem der Ansprüche 4 bis 7, **dadurch gekennzeichnet, dass** die zweiten und/oder dritten Quernuten (11, 12) relativ zu dem ersten Segment (15') der ersten Quernuten (15) gegenläufig sind.

9. Reifen (100) nach einem der Ansprüche 4 bis 8, **dadurch gekennzeichnet, dass** in den Paaren zweiter und/oder dritter Quernuten (11, 12) eine zweite und/oder eine dritte Quernut sich auf der Verlängerung der verbleibenden zweiten und/oder dritten umlaufenden Nut erstreckt.

10. Reifen (100) nach einem der Ansprüche 4 bis 9, **dadurch gekennzeichnet, dass** der Verlauf der zweiten und/oder dritten Quernuten (11, 12) mit der Äquatorialebene (X-X) einen Winkel α größer oder gleich 45° bildet.

11. Reifen (100) nach einem der Ansprüche 4 bis 10, **dadurch gekennzeichnet, dass** die zweiten und/oder dritten umlaufenden Rippen (9, 10) jeweils eine Vielzahl von zweiten und/oder dritten Lamellen (22, 23) umfassen, die einen im Wesentlichen quer verlaufenden Verlauf aufweisen.

12. Reifen (100) nach einem von Anspruch 11, **dadurch gekennzeichnet, dass** die zweiten und/oder dritten Lamellen (22, 23) einen im Wesentlichen geraden Verlauf aufweisen.

13. Reifen (100) nach den Ansprüchen 11 oder 12, **dadurch gekennzeichnet, dass** die zweiten und/oder dritten Lamellen (22, 23) relativ zu dem ersten Segment (15') der ersten Quernuten (15) gegenläufig sind.

14. Reifen (100) nach einem der Ansprüche 11 bis 13, **dadurch gekennzeichnet, dass** die zweiten und/oder dritten Lamellen (22, 23) jeweils einen Verlauf im Wesentlichen parallel zu dem Verlauf der zweiten und/oder dritten Quernuten (11, 12) aufweisen.

15. Reifen (100) nach einem der Ansprüche 4 bis 14, **dadurch gekennzeichnet, dass** die zweiten und/oder dritten Quernuten (11, 12) jedes Paares durch eine vierte (24) und/oder eine fünfte Lamelle (25) verbunden sind.

16. Reifen (100) nach Anspruch 15, **dadurch gekennzeichnet, dass** die vierten (24) und/oder fünften Lamellen (25) einen Verlauf aufweisen, der im Wesentlichen parallel zu dem Verlauf der zweiten und/oder dritten Quernuten (11, 12) und/oder der zweiten und/oder dritten Lamellen (22, 23) ist.

17. Reifen (100) nach einem der Ansprüche 4 bis 16, **dadurch gekennzeichnet, dass** die zweiten und/oder dritten Quernuten (11, 12) jedes Paares in der Fortsetzung des zweiten Segments (15") der ersten Quernuten (15) liegen.

## Revendications

1. Pneu de voiture (100) présentant une bande de roulement (7) comprenant une région centrale (L1), s'étendant à travers un plan équatorial (X-X), et deux régions d'épaulement (L2, L3), qui sont séparées de la région centrale par une première rainure circonférentielle (1), délimitant axialement une première région d'épaulement (L2) de la région centrale (L1), et une deuxième rainure circonférentielle (2), délimitant axialement une seconde région d'épaulement (L3) de la région centrale (L1) ;
- ladite région centrale (L1) présentant une largeur supérieure ou égale à au moins 35 % d'une largeur effective (L) de ladite bande de roulement (7) ;
- ladite région centrale (L1) présentant une pluralité de nervures (8, 9, 10) comprenant des pluralités respectives de rainures transversales et de lamelles ; ladite pluralité de nervures (8, 9, 10) comprenant au moins une première nervure (8) comprenant une pluralité de premières rainures transversales (15) ;
- lesdites premières rainures transversales (15) s'étendant sur au moins 90 % de la largeur de ladite première nervure (8) ;
- chaque première rainure transversale (15) comprenant un premier segment sensiblement droit (15'), incliné par rapport à une direction parallèle audit plan équatorial (X-X) de manière à former un angle θ inférieur ou égal à 70°, un second segment sensiblement droit (15"), contre-incliné par rapport audit premier segment (15'), et un segment de liaison curviligne (15‴) s'étendant entre ledit premier segment (15') et ledit second segment (15") ;
- ladite bande de roulement (7) comprenant en outre une pluralité de lamelles (21, 22, 23, 24, 25) comprenant une pluralité de premières lamelles (21) situées dans ladite première nervure (8) entre lesdites premières rainures transversales (15) ; **caractérisé en ce que**
- lesdites premières lamelles (21) s'étendant sur au moins 60 % de la largeur de ladite première nervure (8) ;
- lesdites premières lamelles (21) présentant un tracé sensiblement droit formant avec ledit plan équatorial (X-X) un angle θ' concordant avec ledit angle θ ; lesdites premières lamelles (21) présentent un tracé sensiblement droit formant avec ledit plan équatorial (X-X) un angle θ' supérieur audit angle θ.
- lesdites premières lamelles (21) ne présentant pas de points d'intersection mutuels.

2. Pneu (100) selon la revendication 1, **caractérisé en ce qu'**au moins certaines desdites premières lamelles (21) s'étendent sur toute la largeur de ladite première nervure (8).

3. Pneu (100) selon la revendication 1 ou 2, **caractérisé en ce que** lesdites premières rainures transversales (15) s'étendent sur toute la largeur de ladite première nervure (8).

4. Pneu (100) selon l'une quelconque des revendications précédentes, **caractérisé en ce que** ladite région centrale (L1) comprend une troisième (3) et/ou une quatrième (4) rainure circonférentielle délimitant axialement au moins une deuxième et/ou une troisième nervure circonférentielle (9, 10), lesdites deuxième et/ou troisième nervures circonférentielles (9, 10) comprenant respectivement une pluralité de paires de deuxièmes et/ou troisièmes rainures transversales (11, 12).

5. Pneu (100) selon la revendication 4, **caractérisé en ce que** les deuxièmes et/ou troisièmes rainures transversales (11, 12) desdites paires de deuxièmes et/ou troisièmes rainures transversales (11, 12) s'étendent sur au plus 40 % de la largeur de la nervure (9, 10) où elles sont situées.

6. Pneu (100) selon l'une quelconque des revendications 4 ou 5, **caractérisé en ce que** lesdites deuxième et/ou troisième rainures transversales (11, 12) s'étendent à partir d'une rainure circonférentielle qui est adjacente à la nervure (9, 10) où elles sont situées.

7. Pneu (100) selon l'une quelconque des revendications 4 à 6, **caractérisé en ce que** lesdites deuxième et/ou troisième rainures transversales (11, 12) de chaque paire s'étendent à partir de deux rainures circonférentielles différentes qui sont adjacentes à la nervure (9, 10) où elles sont situées.

8. Pneu (100) selon l'une quelconque des revendications 4 à 7, **caractérisé en ce que** lesdites deuxième et/ou troisième rainures transversales (11, 12) sont contre-inclinées par rapport audit premier segment (15') desdites premières rainures transversales (15).

9. Pneu (100) selon l'une quelconque des revendications 4 à 8, **caractérisé en ce que** dans lesdites paires de deuxième et/ou troisième rainures transversales (11, 12), une deuxième et/ou une troisième rainure transversale s'étend sur le prolongement de la deuxième et/ou troisième rainure circonférentielle restante.

10. Pneu (100) selon l'une quelconque des revendications 4 à 9, **caractérisé en ce que** le tracé desdites deuxième et/ou troisième rainures transversales (11, 12) forme avec ledit plan équatorial (X-X) un angle α supérieur ou égal à 45°.

11. Pneu (100) selon l'une quelconque des revendications 4 à 10, **caractérisé en ce que** lesdites deuxième et/ou troisième nervures circonférentielles (9, 10) comprennent respectivement une pluralité de deuxième et/ou troisième lamelles (22, 23) présentant un tracé sensiblement transversal.

12. Pneu (100) selon l'une quelconque de la revendication 11, **caractérisé en ce que** lesdites deuxième et/ou troisième lamelles (22, 23) présentent un tracé sensiblement droit.

13. Pneu (100) selon les revendications 11 ou 12, **caractérisé en ce que** lesdites deuxième et/ou troisième lamelles (22, 23) sont contre-inclinées par rapport audit premier segment (15') desdites premières rainures transversales (15).

14. Pneu (100) selon l'une quelconque des revendications 11 à 13, **caractérisé en ce que** lesdites deuxième et/ou troisième lamelles (22, 23) présentent respectivement un tracé sensiblement parallèle au tracé desdites deuxième et/ou troisième rainures transversales (11, 12).

15. Pneu (100) selon l'une quelconque des revendications 4 à 14, **caractérisé en ce que** lesdites deuxième et/ou troisième rainures transversales (11, 12) de chaque paire sont reliées par une quatrième (24) et/ou une cinquième lamelle (25).

16. Pneu (100) selon la revendication 15, **caractérisé en ce que** lesdites quatrième (24) et/ou cinquième lamelles (25) présentent un tracé sensiblement parallèle au tracé desdites deuxième et/ou troisième rainures transversales (11, 12) et/ou desdites deuxième et/ou troisième lamelles (22, 23).

17. Pneu (100) selon l'une quelconque des revendications 4 à 16, **caractérisé en ce que** les deuxième et/ou troisième rainures transversales (11, 12) de chaque paire se situent dans le prolongement dudit second segment (15") desdites premières rainures transversales (15).
